# EUROPÄISCHE PATENTANMELDUNG

(11) **EP 2 573 014 A1**
(43) Veröffentlichungstag der Anmeldung: **27.03.2013**
(21) Anmeldenummer: 12185645.4
(22) Anmeldetag: 24.09.2012
(51) Int. Cl.: B65G 65/46

(54) **Vorrichtung zum Fördern von Schüttgut**

(30) Priorität: 22.09.2011 AT 13662011
(71) Anmelder: Lasshofer, Markus, 5581 St. Margarethen Im Lungau (AT)
(72) Erfinder: Lasshofer, Markus, 5581 St. Margarethen Im Lungau (AT)
(74) Vertreter: Babeluk, Michael

(57) **Zusammenfassung**

Die Erfindung betrifft eine Vorrichtung zum Fördern von Schüttgut, mit einer Aufnahmekammer (2), die vorzugsweise in einem Eckbereich oder Randbereich eines Behälters (1) mit einem im Wesentlichen waagrecht angeordneten Boden (7, 8) angeordnet ist und in der eine Förderschnecke (3) an einem Ende gelagert ist, wobei die Aufnahmekammer (2) schwenkbar ausgeführt ist, um die Förderchnecke (3) in einer Pendelbewegung über den Boden (7, 8) des Behälters (1) zu beegen. Die Belastung der Förderschnecke (3) kann dadurch minimiert werden, dass die Förderschnecke (3) in der Aufnahmekammer (2) um eine waagrechte Achse schwenkbar angeordnet ist. Die Erfindung betrifft auch ein Verfahren zum Fördern von Schüttgut.

## Beschreibung

Die Erfindung betrifft eine Vorrichtung zum Fördern von Schüttgut gemäß dem Oberbegriff von Patentanspruch 1. insbesondere geht der vorliegende Erfindung von einer Vorrichtung mit einer Aufnahmekammer aus, die vorzugsweise in einem Eckbereich oder Randbereich eines Behälters mit einem im Wesentlichen waagrecht angeordneten Boden angeordnet ist und in der eine Förderschnecke an einem Ende gelagert ist, wobei die Aufnahmekammer schwenkbar ausgeführt ist, um die Förderschnecke in einer Pendelbewegung über den Boden des Behälters zu bewegen.

Förderschnecken sind vorteilhafte Mittel zum Austragen von Schüttgut, wie etwa Brennstoffpellets, aber auch beispielsweise von Hackschnitzeln oder von anderen rieselfähigen Produkten.

Um eine möglichst vollständige Entleerung des Behälters zu erreichen, werden bei bekannten Lösungen Förderschnecken am Boden des Behälters in einer Rinne angeordnet und seitlich davon werden geneigte Gleitflächen angeordnet, die das Fördergut zur Rinne hin bewegen. Dies ist aufwendig und es wird der nutzbare Raum des Behälters verringert.

Aus der EP 225 291 A ist eine Förderschnecke bekannt, die beschränkt beweglich am Boden eines Behälters angeordnet ist. Die Beweglichkeit ist dazu vorgesehen, Dung auszutragen, wobei harte Fremdkörper nicht zu einer Beschädigung der Schnecke führen sollen. Eine zuverlässige Entleerung kann ohne die oben beschriebenen Nachteile nicht erreicht werden.

Weitere bekannte Lösungen sind in der DE 20 2010 012 448 U, der DE 10 2004 046 993 A, der AT 386 396 B, der FR 2 360 494 A und der DE 84 05 602 U beschrieben. Allen diesen Lösungen ist gemeinsam, dass eine Förderschnecke um eine im Wesentlichen vertikalen Achse entlang des Bodens eines Behälters verschwenkt wird. Dadurch ist eine weitgehend vollständige Entleerung des Behälters möglich.

Die bekannten Lösungen sind jedoch mit Nachteilen behaftet. Einerseits belastet der Schwenkantrieb die Förderschnecke sehr stark auf Biegung, da Schwenkbewegung gegen den Widerstand des zu fördernden Mediums ausgeführt werden muss. Andererseits hat sich herausgestellt, dass Förderschnecken oftmals dazu neigen, sich vom Boden bis Behälters nach oben hin zu entfernen. Dies bedeutet, dass das freie Ende der Förderschnecke gleichsam nach oben hin aufschwimmt. Dies stellt eine zusätzliche Belastung der Förderschnecke auf Biegung dar.

Aufgabe der vorliegenden Erfindung ist es, eine Vorrichtung zu schaffen, mit der Schüttgut sicher und weitgehend vollständig aus einem Behälter ausgetragen werden kann. Dabei sollen die obigen Nachteile vermieden werden und insbesondere soll die Belastung der Förderschnecke möglichst gering gehalten werden, um deren Lebensdauer so groß wie möglich zu machen.

Erfindungsgemäß ist werden diese Aufgaben durch die Merkmale von Patentanspruch 1 gelöst. Insbesondere ist im Sinn der Erfindung vorgesehen, dass die Förderschnecke in der Aufnahmekammer um eine waagrechte Achse schwenkbar angeordnet ist.

Im Rahmen der vorliegenden Erfindung wird stets davon ausgegangen, dass der Behälter einen waagerechten Boden aufweist. Dementsprechend ist die Aufnahmekammer um eine vertikale Achse schwenkbar, so dass die entsprechende Schwenkbewegung der Förderschnecke entlang des Bodens erfolgt.

Die Bewegung der Förderschnecke wird aufgrund von Momenten hervorgerufen, die aus zwei Quellen stammen können. Einerseits wird durch die Schwenkeinrichtung ein Ende der Schnecke in der Aufnahmekammer verschwenkt und andererseits wird durch die Drehung der Schnecke eine Reibkraft gegenüber dem Boden erzeugt, die die Förderschnecke in horizontaler Richtung antreibt.

Die Schwenkeinrichtung kann somit die Förderschnecke aktiv antreiben oder aber die natürlich Bewegung so regulieren, dass ein vollständiger Austrag aus dem Behälter erreicht wird.

Ein wesentlicher Aspekt der vorliegenden Erfindung liegt darin, dass auf die Förderschnecke abgesehen vom eigentlichen Drehantrieb kein Schwenkmoment ausgeübt werden muss, solange eine ausreichende Förderung sichergestellt ist. Es hat sich herausgestellt, dass durch die Drehung der Förderschnecke um ihre eigene Achse auch ein gewisser Vortrieb der Förderschnecke im Schwenkrichtung bewirkt wird, so dass in der Regel eine Ausbildung von Materialbrücken selbsttätig verhindert wird. Sobald die Förderschnecke leer läuft, was man einerseits an mangelnder Förderung und andererseits an einen geringen Widerstand der Schnecke erkennt, kann durch Aktivierung des Schwenkantriebs der Eingriff der Förderschnecke verbessert werden, so dass eine ausreichende Förderung sofort wiederhergestellt werden kann.

Im Zuge dieser Schwenkbewegung, unabhängig davon, ob sie durch die Schnecke selbst oder durch den Schwenkantrieb verursacht ist, kommt es in der Regel zu einem "Aufschwimmen" der Förderschnecke, das allerdings durch die Lagerung zugelassen wird und keinen nachteiligen Einfluss auf das Förderverhalten der Schnecke hat. Vor allem aber wird eine Biegebelastung der Förderschnecke auf diese Weise verhindert. Praktische Versuche haben gezeigt, dass der Neigungswinkel der Förderschnecke gegenüber einer horizontalen Ebene durchaus eine Größenordnung von 30° erreichen kann. Ein Verschwenken der Aufnahmekammer bewirkt somit in diesem Fall eine Bewegung der Förderschnecke entlang eines Kegelmantels.

Eine besonders bevorzugte Ausführungsvariante sieht vor, dass die Aufnahmekammer um eine im Wesentlichen senkrechte Achse schwenkbar ist. Das Lager für die Förderschnecke ist bei dieser Ausführungsvariante grundsätzlich fest in der Aufnahmekammer angebracht, so dass sich die gesamte Einheit aus Aufnahmekammer und Förderschnecke entsprechend um eine horizontale Achse bewegt.

Eine besonders begünstigte Ausführungsvariante der vorliegenden Erfindung ist so ausgebildet, dass die Aufnahmekammer einen nach unten geöffneten Austragsschacht aufweist. Das Fördermaterial kann dabei unterhalb des Bodens weitergefördert werden.

Die Förderschnecke kann direkt auf dem Boden des Behälters aufliegen und dadurch die entsprechenden Reibungskräfte erfahren, oder aber in geringer Höhe über dem Boden angeordnet sein. Wenn sich der Behälter zunehmend entleert, stellt die Förderschnecke somit eine Schicht aus kompaktiertem Schüttgut her, die nicht ausgetragen wird und auf der die Förderschnecke schwenkbar beweglich ist.

Die Aufnahmekammer ist bevorzugt um eine im Wesentlichen senkrechte Achse schwenkbar und besitzt eine Öffnung für die Förderschnecke, durch die das Material in die Aufnahmekammer eingeführt wird. Es hat sicher herausgestellt, dass es besonders begünstigt ist, wenn die Querschnittsfläche der Öffnung zwischen dem 1,5fachen und dem 3fachen Förderquerschnitt der Förderschnecke beträgt. Als Förderquerschnitt der Förderschnecke wird die Querschnittsfläche des virtuellen Zylinders bezeichnet der die Förderschnecke umhüllt und der durch die Außenkanten der Förderschnecke definiert ist.

Besonders günstig ist es, wenn die Aufnahmekammer einen nach Unten geöffneten Austragsschacht aufweist, durch den das in die Aufnahmekammer geförderte Material ausgetragen wird.

Eine besonders begünstigte Ausführungsvariante sieht vor, dass die Förderschnecke entlang eines Kreissektors vorzugsweise in einem Winkel von etwa 90° schwenkbar ist. Der Behälter hat beispielsweise einen quadratischen Querschnitt und die Aufnahmekammer ist in einem Eck des Quadrats angeordnet. Es ist aber auch möglich, bei einem rechteckigen Behälter die Aufnahmekammer etwa in der Mitte einer Längsseite anzuordnen, sodass der Bewegungswinkel der Förderschnecke über 180° beträgt.

Eine alternative besonders günstige Ausführungsvariante der Erfindung sieht vor, dass sich die Förderschnecke um einen zentralen Behälter angeordneten Punkt schwenkbar ist und einen Schwenkbereich von 360° aufweist, d.h. frei in den Mittelpunkt drehbar ist.

Insbesondere dann, wenn der Bewegungsbereich der Förderschnecke eingeschränkt ist, ist es von besonderem Vorteil, wenn die Schwenkeinrichtung einen Getriebemotor als Schwenkantrieb umfasst. Dieser dient dazu, die Förderschnecke auch entgegen der Richtung zu bewegen, die durch das Drehmoment aufgrund der Drehung vorgegeben ist.

Eine weitere Ausführungsvariante mit besonderem Vorteil sieht vor, dass die Förderschnecke in Axialrichtung vorgespannt ist. Die Förderschnecke ist dabei kernlos und durch ein Zugglied in einer zentralen Öffnung wird eine Zugspannung auf die Förderschnecke ausgeübt, die diese vorspannt. Auf diese Weise kann die Widerstandsfähigkeit der Schnecke gegenüber Biegung wesentlich erhöht werden.

Als konstruktiv besonders günstige Lösung hat sicher herausgestellt, die Aufnahmekammer auf einen wälzgelagerten Drehkranz aufzubauen. Durch diese starre Lagerung kann eine robuste und betriebssichere Ausführung erreicht werden.

Gemäß einer besonders bevorzugten Ausführungsvariante der vorliegenden Erfindung ist die Förderschnecke in der Aufnahmekammer frei gelagert. Dies bedeutet, dass die Förderschnecke nur durch ihr eigenes Gewicht nach unten bewegbar ist. Solange das zu fördernde Schüttgut die Förderschnecke bedeckt, spielt der Winkel der Förderschnecke gegenüber einer horizontalen Ebene keine wesentliche Rolle für das Förderverhalten. Wenn bei zunehmender Entleerung des Behälters die Förderschnecke an der Oberfläche des Schüttguts zu liegen kommt, erfolgt gleichzeitig mit dem Absinken des Pegels an Schüttgut eine Schwenkbewegung der Förderschnecke nach unten. Durch einen Sensor kann der Winkel der Förderschnecke gegenüber der horizontalen Ebene erfasst werden, um rechtzeitig eine Schwenkbewegung in horizontaler Richtung veranlassen zu können.

Gemäß einer alternativen Ausführungsvariante kann die Förderschnecke beispielsweise durch eine Feder nach unten vorgespannt werden. Diese Vorspannung unterstützt die Gewichtskraft, um eine sichere Förderung zu gewährleisten, wenn sich die Förderschnecke bereits an der Oberfläche des Schüttguts befindet.

Die vorliegende Erfindung betrifft auch ein Verfahren zum Fördern von Schüttgut aus einem Behälter gemäß Patentanspruch 12. Wesentlich für das erfindungsgemäße Verfahren ist es, dass eine Bewegung der Förderschnecke in vertikaler Richtung, d.h. um eine horizontale Achse stets frei zugelassen wird. Im einzelnen läuft das erfindungsgemäße Verfahren dabei so ab, dass der Hauptteil des Entleerungsvorganges, bei dem ausreichend Schüttgut im Behälter vorliegt, so dass die Förderschnecke durch das Schüttgut bedeckt ist, weitgehend ohne Bewegung der Förderschnecke um einen vertikalen Achse durchgeführt wird. Wenn dann das Schüttgut oberhalb der Förderschnecke aus dem Behälter gefördert ist, dann sind die Förderschnecke wie oben beschrieben bis zum Boden des Behälters ab. Seitlich neben der Förderschnecke werden sich jedoch noch erhebliche Mengen des Schüttguts in Form von entsprechenden Schüttkegeln befinden. Um auch diese entsprechend abzutragen wird bei Unterschreitung eines vorbestimmten Grenzwerts der vertikalen Auslenkung der Förderschnecke die aktive horizontale Schwenkbewegung aktiviert. Umgekehrt kann aus einer Winkellage der Förderschnecke in vertikaler Richtung, die einen bestimmten Grenzwert überschreitet, geschlossen werden, dass noch ausreichend Schüttgut vorliegt, so dass eine aktive Schwenkbewegung um eine vertikalen Achse nicht erforderlich ist.

Da in der Regel nur mehr wenig Schüttgut im Behälter vorliegt, wenn die Förderschnecke unter denen als Grenzwert vorgegebenen Winkel absinkt, kann die Schwenkbewegung entlang des Behälterbodens mit geringem Widerstand und daher mit geringer Belastung der Förderschnecke erfolgen.

In der Folge wird die vorliegende Erfindung anhand der in den Fig. dargestellten Ausführungsbeispiele näher erläutert. Es zeigen:
Fig. 1, Fig. 2 und Fig. 3 Draufsichten auf drei verschiedene Ausführungsvarianten der vorliegenden Erfindung und
Fig. 4 und 5 unterschiedliche Ausführungsvarianten im Schnitt.

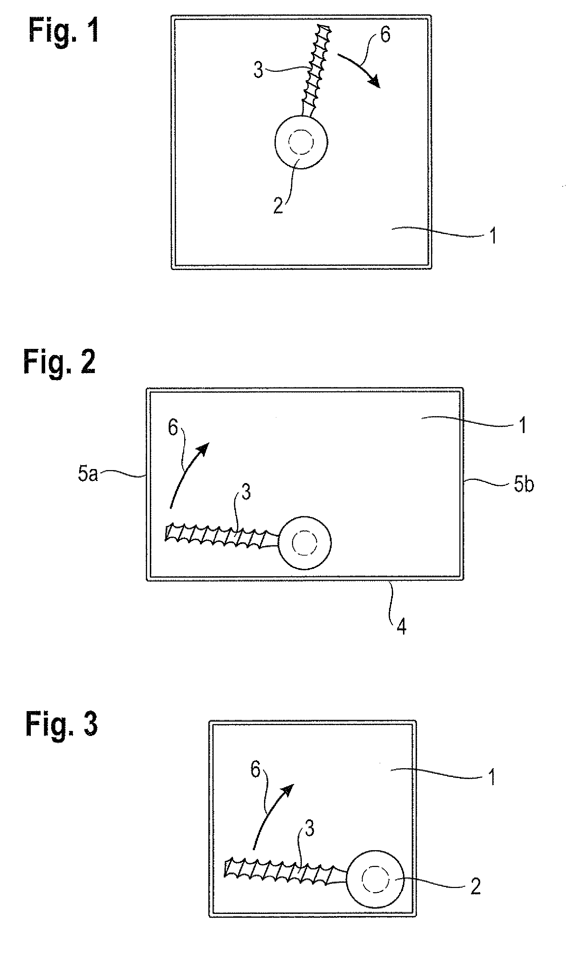

In Fig. 1 ist schematisch eine Draufsicht auf eine erste Ausführungsvariante einer erfindungsgemäßen Vorrichtung gezeigt. Der Behälter 1 ist im Wesentlichen quadratisch und besitzt an seinem Boden eine zentral angeordnete Aufnahmekammer 2. Aus dieser Aufnahmekammer 2 ragt eine Förderschnecke 3 die den Boden des Behälters 1 überstreicht. Mit Ausnahme der Eckbereiche wird dabei nahezu die gesamte Grundfläche des Behälters 1 durch die Förderschnecke 3 erfasst.

Bei der Ausführungsvariante von Fig. 2 ist die Aufnahmekammer 2 etwa mittig an der längeren Seitenwand 4 eines rechteckigen Behälters 1 angeordnet. Die Förderschnecke 3 überstreicht einen halbkreisförmigen Bereich, der bis zu den kürzeren Seitenwänden 5a, 5b reicht.

Die in Fig. 3 schematisch dargestellte Ausführungsvariante sieht einen Aufnahmekammer 2 vor, der in der Ecke eines quadratischen Behälters 1 angeordnet ist. Hier wird ein viertelkreisförmiger Bereich des Behälters durch die Förderschnecke 3 überstrichen. Jeweils mit Teilen 6 ist die Bewegungsrichtung der Förderschnecke dargestellt.

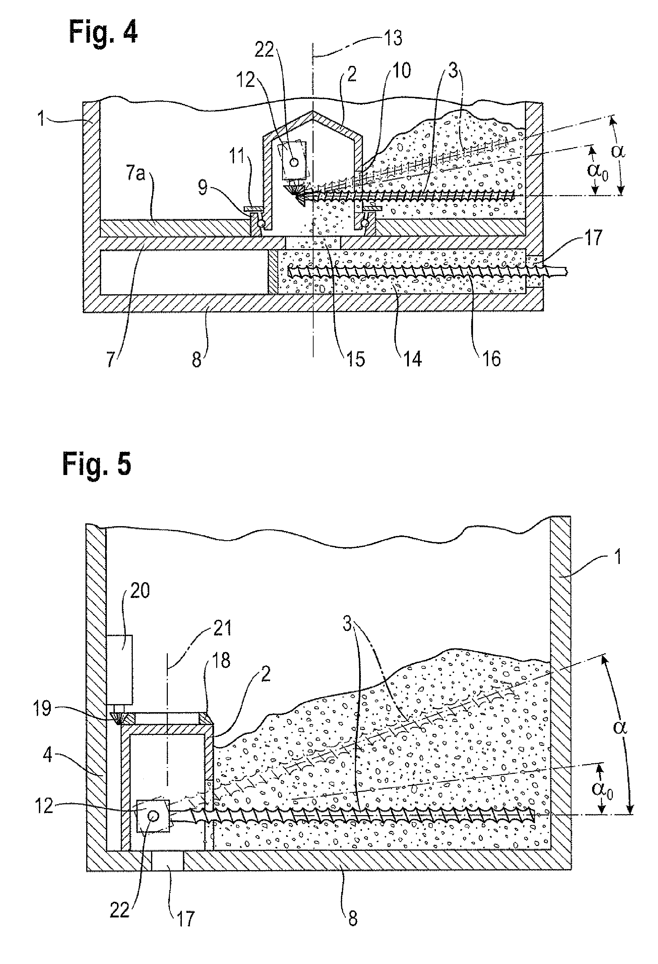

In Fig. 4 ist der Aufbau einer erfindungsgemäßen Vorrichtung in größerem Detail gezeigt. Der Behälter 1 besitzt einen Zwischenboden 7 oberhalb des eigentlichen Behälterbodens 8. Auf dem Zwischenboden 7 ist eine Bodenplatte 7a angeordnet, die in der Mitte vom Drehkranz 9 die Form eines Kugellagers trägt. Auf diesem Drehkranz 9 ist die Aufnahmekammer 2 aufgebaut, die eine seitliche Öffnung 10 aufweist, durch die die Förderschnecke 3 nach Außen geführt ist. Ein Abdeckring 11 verhindert das Eindringen von Schüttgut in das Kugellager des Drehkranzes. Im Inneren der Aufnahmekammer 2 ist ein Getriebemotor 12 angeordnet, der die Förderschnecke 3 antreibe. Durch die Reibung der Förderschnecke 3 auf der Platte 7a wird ein Drehmoment um eine senkrechte Achse 13 erzeugt, die mittig durch den Behälter 1 und die Aufnahmekammer 2 geht. Dadurch erfolgt eine langsame Drehbewegung der Förderschnecke 3 um diese Achse 13.

Unterhalb des Zwischenbodens 7 ist ein Aufnahmeraum 14 für das Schüttgut vorgesehen, das durch diesen Aufnahmeraum 14 durch eine Öffnung 15 im Zwischenboden 7 fällt. Eine weitere Förderschnecke 16 transportiert das Schüttgut übe eine Öffnung 17 an der Unterseite des Behälters 1 nach außen.

Die Ausführungsvariante von Fig. 5 unterscheidet sich von der von Fig. 4 dadurch, dass die Aufnahmeammer 2 an einer Wand 4 des Behälters 1 angeordnet ist. Auch hier ist ein Getriebemotor 12 im Inneren der Aufnahmekammer 2 vorgesehen, der die Förderschnecke 3 antreibt. An der Oberseite der Aufnahmekammer 2 ist ein Zahnkranz 18 ausgebildet, in dem ein Ritzel 19 eines weiteren Getriebemotors 20 eingreift. Dadurch ist es möglich, die Aufnahmekammer 2 um eine senkrechte Achse 21 zu drehen und zwar unabhängig von der Drehung der Förderschnecke 3.

Bei der Ausführungsvariante von Fig. 5 ist die Austragöffnung 17 im Boden 8 des Behälters 1 angeordnet.

In den Fig. V und 5 ist die Förderschnecke 3 in der waagerechten Stellung mit durchgezogenen Linien dargestellt. Mit unterbrochenen Linien ist die in vertikaler Richtung verschwenkte Stellung angedeutet, wobei der Schwenkwinkel mit α bezeichnet ist. Darüber hinaus ist auch ein vorbestimmter Grenzwert α₀ von beispielsweise 10° für den Schwenkwinkel α eingetragen. Dadurch wird der Betriebsmodus und insbesondere die aktive Schwenkbewegung um die vertikalen Achse beeinflusst.

Ein nicht dargestellter Sensor erfasst laufend den Schwenkwinkel α.

Die Förderschnecke 3 ist als kernlose Schnecke ausgebildet, in der verdrehfest ein Stahlseil angeordnet ist, das die Windungen der Förderschnecke 3 mit einer Zugspannung vorspannt. Auf diese Weise können die Biegemomente, die bei der Ausführungsvariante von Fig. 5 auf die Förderschnecke 3 ausgeübt werden, wirksam abgefangen werden, ohne die Förderschnecke zu zerstören.

Die vorliegende Erfindung ermöglicht es Behälter für Schüttgut wie etwa Brennstoffpellets weitgehend vollständig zu entleeren, ohne voluminöse Schrägflächen oder dergleichen einbauen zu müssen.

## Patentansprüche

1. Vorrichtung zum Fördern von Schüttgut, mit einer Aufnahmekammer (2), die vorzugsweise in einem Eckbereich oder Randbereich eines Behälters (1) mit einem im Wesentlichen waagrecht angeordneten Boden (7, 8) angeordnet ist und in der eine Förderschnecke (3) an einem Ende gelagert ist, wobei die Aufnahmekammer (2) schwenkbar ausgeführt ist, um die Förderschnecke (3) in einer Pendelbewegung über den Boden (7, 8) des Behälters (1) zu bewegen, **dadurch gekennzeichnet, dass** die Förderschnecke (3) in der Aufnahmekammer (2) um eine waagrechte Achse (22) schwenkbar angeordnet ist.

2. Vorrichtung nach Anspruch 1, **dadurch gekennzeichnet, dass** die Aufnahmekammer (2) um eine im Wesentlichen senkrechte Achse (21) schwenkbar ist.

3. Vorrichtung nach einem der Ansprüche 1 oder 2, **dadurch gekennzeichnet, dass** die Aufnahmekammer (2) eine Öffnung für die Förderschnecke (3) aufweist, die vorzugsweise eine Querschnittsfläche aufweist, die zwischen dem 1,5fachen und dem 3fachen Förderquerschnitt der Förderschnecke (3) beträgt.

4. Vorrichtung nach einem der Ansprüche 1 bis 3, **dadurch gekennzeichnet, dass** die Aufnahmekammer (2) einen nach unten geöffneten Austragschacht aufweist.

5. Vorrichtung nach einem der Ansprüche 1 bis 4, **dadurch gekennzeichnet, dass** die Förderschnecke (3) entlang eines Kreissektors vorzugsweise in einem Winkel von etwa 90° schwenkbar ist.

6. Vorrichtung nach einem der Ansprüche 1 bis 5, **dadurch gekennzeichnet, dass** die Schwenkeinrichtung einen Getriebemotor als Schwenkantrieb umfasst.

7. Vorrichtung nach einem der Ansprüche 1 bis 6, **dadurch gekennzeichnet, dass** die Förderschnecke (3) in Axialrichtung vorgespannt ist.

8. Vorrichtung nach einem der Ansprüche 1 bis 7, **dadurch gekennzeichnet, dass** die Aufnahmekammer (2) auf einem wälzgelagerten Drehkranz aufgebaut ist.

9. Vorrichtung nach einem der Ansprüche 1 bis 8, **dadurch gekennzeichnet, dass** die Förderschnecke (3) in der Aufnahmekammer (2) um die waagrechte Achse (22) frei schwenkbar gelagert ist.

10. Vorrichtung nach einem der Ansprüche 1 bis 8, **dadurch gekennzeichnet, dass** die Förderschnecke (3) in der Aufnahmekammer (2) um die waagrechte Achse (22) nach unten vorgespannt ist.

11. Vorrichtung nach einem der Ansprüche 1 bis 10, **dadurch gekennzeichnet, dass** im Bereich der Aufnahmekammer (2) ein Sensor zur Erfassung der Stellung der Förderschnecke (3) in vertikaler Richtung vorgesehen ist.

12. Verfahren zum Fördern von Schüttgut aus einem Behälter (1), bei dem das Schüttgut durch die Drehung einer Förderschnecke (3) ins Innere einer Aufnahmekammer (2) gefördert wird und von dort nach unten ausgetragen wird, **dadurch gekennzeichnet, dass** während des Betriebs der Förderschnecke (3) diese vertikaler Richtung frei schwenkbar belassen wird.

13. Verfahren nach Anspruch 12, **dadurch gekennzeichnet, dass** während des Betriebs der Förderschnecke (3) der Schwenkwinkel (α) in vertikaler Richtung laufend bestimmt wird und eine motorische Schwenkbewegung der Förderschnecke (3) in horizontaler Richtung dann ausgelöst wird, wenn der Schwenkwinkel (α) in vertikaler Richtung einen vorbestimmten Grenzwert (α₀) unterschreitet.

14. Verfahren nach einem der Ansprüche 12 oder 13, **dadurch gekennzeichnet, dass** während des Betriebs der Förderschnecke (3) der Schwenkwinkel (α) in vertikaler Richtung laufend bestimmt wird und eine motorische Schwenkewegung der Förderschnecke (3) in horizontaler Richtung dann unterrochen wird, wenn der Schwenkwinkel (α) in vertikaler Richtung einen vorestimmten Grenzwert (α₀) überschreitet.
